# EUROPEAN PATENT APPLICATION

(11) **EP 4 287 665 A1**
(43) Date of publication of application: **06.12.2023**
(21) Application number: 22745098.8
(22) Date of filing: 19.01.2022
(51) Int. Cl.: H04W 4/02

(54) **LOCATION METHOD AND APPARATUS, AND STORAGE MEDIUM**

(30) Priority: 29.01.2021 CN 202110127255
(71) Applicant: Datang Mobile Communications Equipment Co., Ltd., Beijing 100085 (CN)
(72) Inventor: FU, Jing, Beijing 100085 (CN); QUAN, Haiyang, Beijing 100085 (CN); LI, Jianxiang, Beijing 100085 (CN); ZHAO, Yali, Beijing 100085 (CN)
(74) Representative: Studio Torta S.p.A.
(86) International application number: PCT/CN2022/072649
(87) International publication number: WO 2022/161223

(57) **Abstract**

Disclosed are a location method and apparatus, and a storage medium, relating to the technical field of communications. An implementation scheme comprises: acquiring a location request sent by a communication device, wherein the location request is used for instructing a UE to send location information on a sidelink interface; and sending the location information on the sidelink interface.

## Description

### CROSS-REFERENCE TO RELATED APPLICATIONS

This application is based on and claims priority to Chinese Patent Application No. 202110127255.4, filed on January 29, 2021, the entire contents of which are incorporated herein by reference.

### TECHNICAL FIELD

The present disclosure relates to a field of communication technologies, and specifically to a positioning method, a positioning apparatus and a storage medium.

### BACKGROUND

With rapid development of communication technologies, a positioning technology is applied more and more widely. A sidelink becomes an essential part of the positioning technology. Due to limited resources of a sidelink interface, positioning may not be efficiently and accurately performed. Therefore, there is an urgent need to improve a positioning efficiency.

### SUMMARY

A positioning method, a positioning apparatus and a storage medium are provided in the present disclosure.

According to an aspect of the present disclosure, a positioning method is provided, applicable to a user equipment (UE). The method includes:
acquiring a positioning request sent by a communication device, in which the positioning request is configured to indicate the first UE to send positioning information at a sidelink interface; and
sending the positioning information at the sidelink interface.

In some embodiments, the communication device is any one of a second UE, a base station and a location management function (LMF) server.

In some embodiments, the positioning information includes at least one of: positioning assistance information or a positioning pilot signal.

In some embodiments, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a request message name, in which different message names correspond to different positioning information.

In some embodiments, the positioning request is a specified signal, and the specified signal corresponds to at least one of: a type of the positioning information, a message including the positioning information or a resource corresponding to the positioning information.

In some embodiments, the method further includes: sending an indication message at the sidelink interface, in which the indication message is configured to indicate positioning information that the first UE may provide.

In some embodiments, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

In some embodiments, the communication device is a base station or a location management function server, and the positioning request further includes the positioning information.

In some embodiments, the method further includes: sending the positioning request to the communication device.

According to another aspect of the present disclosure, a positioning method is provided, applicable to a communication device. The method includes:
sending a positioning request to a first user equipment (UE), in which the positioning request is configured to indicate the first UE to send positioning information at a sidelink interface.

In some embodiments, the positioning information includes at least one of: positioning assistance information or a positioning pilot signal.

In some embodiments, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a request message name, in which different message names correspond to different positioning information.

In some embodiments, the positioning request is a specified signal, and the specified signal corresponds to at least one of: a type of the positioning information, a message including the positioning information or a resource corresponding to the positioning information.

In some embodiments, the communication device is any one of a second UE, a base station and a location management function (LMF) server.

In some embodiments, the communication device is a base station, and sending the positioning request to the first UE, includes:
receiving a positioning request sent by a second UE, and sending the positioning request to the first UE; or, receiving a positioning request sent by the location management function server, and sending the positioning request to the first UE.

In some embodiments, the positioning request further includes the positioning information.

In some embodiments, the communication device is the second UE, and the method further includes:
acquiring an indication message sent by the first UE at the sidelink interface, in which the indication message is configured to indicate positioning information that the first UE may provide.

In some embodiments, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of the positioning information corresponding to each positioning request signal, a resource of the positioning information corresponding to each positioning request signal or a resource index number of the positioning information corresponding to each positioning request signal.

According to another aspect of the present disclosure, a positioning apparatus is provided, applicable to a first user equipment (UE). The positioning apparatus includes: a memory, a transceiver and a processor.

The memory is configured to store a computer program. The transceiver is configured to transmit and receive data under a control of the processor. The processor is configured to read the computer program in the memory and perform operations of:
acquiring a positioning request sent by a communication device, in which the positioning request is configured to indicate the first UE to send positioning information at a sidelink interface; and
sending the positioning information at the sidelink interface.

In some embodiments, the communication device is any one of a second UE, a base station and a location management function (LMF) server.

In some embodiments, the positioning information includes at least one of: positioning assistance information or a positioning pilot signal.

In some embodiments, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, in which different message names correspond to different positioning information.

In some embodiments, the positioning request is a specified signal, and the specified signal corresponds to at least one of: a type of the positioning information, a message including the positioning information or a resource corresponding to the positioning information.

In some embodiments, the processor is configured to control the transceiver to:
send an indication message at the sidelink interface, in which the indication message is configured to indicate positioning information that the first UE may provide.

In some embodiments, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

In some embodiments, the communication device is a base station or a location management function (LMF) server, and the positioning request further includes the positioning information.

In some embodiments, the processor is configured to control the transceiver to:
send the positioning request to the communication device.

According to another aspect of the present disclosure, a positioning apparatus is provided, applicable to a communication device. The positioning apparatus includes: a memory, a transceiver and a processor.

The memory is configured to store a computer program. The transceiver is configured to transmit and receive data under a control of the processor. The processor is configured to read the computer program in the memory and perform operations of:
sending a positioning request to a first user equipment (UE), in which the positioning request is configured to indicate the first UE to send positioning information at a sidelink interface.

In some embodiments, the positioning information includes at least one of: positioning assistance information or a positioning pilot signal.

In some embodiments, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, in which different message names correspond to different positioning information.

In some embodiments, the positioning request is a specified signal, and the specified signal corresponds to at least one of: a type of the positioning information, a message including the positioning information or a resource corresponding to the positioning information.

In some embodiments, the communication device is any one of a second UE, a base station and a location management function (LMF) server.

In some embodiments, the communication device is a base station, the positioning request is sent to the first UE, and the processor is configured to control the transceiver to:
receive a positioning request sent by a second UE, and send the positioning request to the first UE; or, receive a positioning request sent by the location management function server, and send the positioning request to the first UE.

In some embodiments, the positioning request further includes the positioning information.

In some embodiments, the communication device is the second UE, and the processor is configured to control the transceiver to: acquire an indication message sent by the first UE at the sidelink interface, in which the indication message is configured to indicate positioning information that the first UE may provide.

In some embodiments, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

According to another aspect of the present disclosure, a positioning apparatus is provided, applicable to a first user equipment (UE). The positioning apparatus includes:
a first acquiring unit, configured to acquire a positioning request sent by a communication device, in which the positioning request is configured to indicate the first UE to send positioning information at a sidelink interface; and
a first sending unit, configured to send the positioning information at the sidelink interface.

According to another aspect of the present disclosure, a positioning apparatus is provided, applicable to a communication device. The apparatus includes:
a fourth sending unit, configured to send a positioning request to a first user equipment (UE), in which the positioning request is configured to indicate the first UE to send positioning information at a sidelink interface.

According to another aspect of the present disclosure, a processor readable storage medium with a computer program stored thereon is provided, in which the computer program is configured to cause a processor to perform the positioning method for the positioning apparatus as described in one aspect of the present disclosure.

According to another aspect of the present disclosure, a processor readable storage medium with a computer program stored thereon is provided, in which the computer program is configured to cause a processor to perform the positioning method for the positioning apparatus as described in another aspect of the present disclosure.

According to another aspect of the present disclosure, a computer program product including a computer program code is provided, in which when the computer program code is running on a computer, the positioning method for the positioning apparatus as described in one aspect of the present disclosure is implemented.

According to another aspect of the present disclosure, a computer program product including a computer program code is provided, in which when the computer program code is running on a computer, the positioning method for the positioning apparatus as described in another aspect of the present disclosure is implemented.

According to another aspect of the present disclosure, a communication device including a processing circuit and an interface circuit is provided, in which the interface circuit is configured to receive a computer code or instruction, and transmit the computer code or instruction to the processing circuit, and the processing circuit is configured to run the computer code or instruction to perform the positioning method for the positioning apparatus as described in one aspect of the present disclosure.

According to another aspect of the present disclosure, a communication device including a processing circuit and an interface circuit is provided, in which the interface circuit is configured to receive a computer code or instruction, and transmit the computer code or instruction to the processing circuit, and the processing circuit is configured to run the computer code or instruction to perform the positioning method for the positioning apparatus as described in another aspect of the present disclosure.

According to yet another aspect of the present disclosure, a computer program including a computer program code is provided, in which when the computer program code is running on a computer, the computer is caused to perform the positioning method for the positioning apparatus as described in one aspect of the present disclosure.

According to yet another aspect of the present disclosure, a computer program including a computer program code is provided, in which when the computer program code is running on a computer, the computer is caused to perform the positioning method for the positioning apparatus as described in another aspect of the present disclosure.

The positioning method, the positioning apparatus and the storage medium according to the present disclosure have the following features:
a positioning request sent by a communication device is obtained, in which the positioning request is configured to indicate a UE to send positioning information at a sidelink interface, and the positioning information is then sent at the sidelink interface. Therefore, resources at the sidelink interface in the UE are saved, and a positioning efficiency at the sidelink interface is greatly improved.

### BRIEF DESCRIPTION OF THE DRAWINGS

FIG. 1 is a flowchart illustrating a positioning method according to an embodiment of the present disclosure.
FIG. 2 is a flowchart illustrating a positioning method according to another embodiment of the present disclosure.
FIG. 3 is a flowchart illustrating a positioning method according to yet another embodiment of the present disclosure.
FIG. 4 is a flowchart illustrating a positioning method according to yet another embodiment of the present disclosure.
FIG. 5 is a flowchart illustrating a positioning method according to yet another embodiment of the present disclosure.
FIG. 6 is a flowchart illustrating a positioning method according to yet another embodiment of the present disclosure.
FIG. 7 is a flowchart illustrating a positioning method according to yet another embodiment of the present disclosure.
FIG. 8 is a diagram illustrating a structure of a positioning apparatus according to an embodiment of the present disclosure.
FIG. 9 is a diagram illustrating a structure of another positioning apparatus according to an embodiment of the present disclosure.
FIG. 10 is a diagram illustrating a structure of yet another positioning apparatus according to an embodiment of the present disclosure.
FIG. 11 is a diagram illustrating a structure of yet another positioning apparatus according to an embodiment of the present disclosure.

### DETAILED DESCRIPTION

The technical solutions in the embodiments of the present disclosure will be described clearly and completely in combination with the accompanying drawings in the embodiments of the present disclosure. The embodiments described are only a part of embodiments in the present disclosure, rather than all the embodiments. On the basis of embodiments of the present disclosure, those skilled in the art obtain all other embodiments without creative work which are within the protection scope of the present disclosure.

In the embodiments of the present disclosure, the term "and/or", describes a relationship between the association objects, indicating that there may exist three relationships, for example, A and/or B, may represent: any of existing A only, existing both A and B, or existing B only. The character "/" generally means the contextual object is a kind of "or" relationship.

A positioning method, a positioning apparatus and a storage medium are provided in the embodiments of the present disclosure. A positioning request sent by a communication device is obtained. The positioning request is configured to indicate the first UE to send positioning information at the sidelink interface. Therefore, resources at the sidelink interface in the UE are saved, and a positioning efficiency at the sidelink interface is greatly improved.

The positioning method, the positioning apparatus and the storage medium in the embodiments of the present disclosure are described referring to attached drawings.

It needs to be noted that the technical solution in the embodiments of the present disclosure is applicable to a variety of systems, particularly a 5^{th} generation (5G) system. For example, the system may be a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system , a 5G new radio (NR) system, etc. The variety of systems include a terminal device and a network side device. The system may further include core network components, such as an evolved packet system (EPS) and a 5G system (5GS).

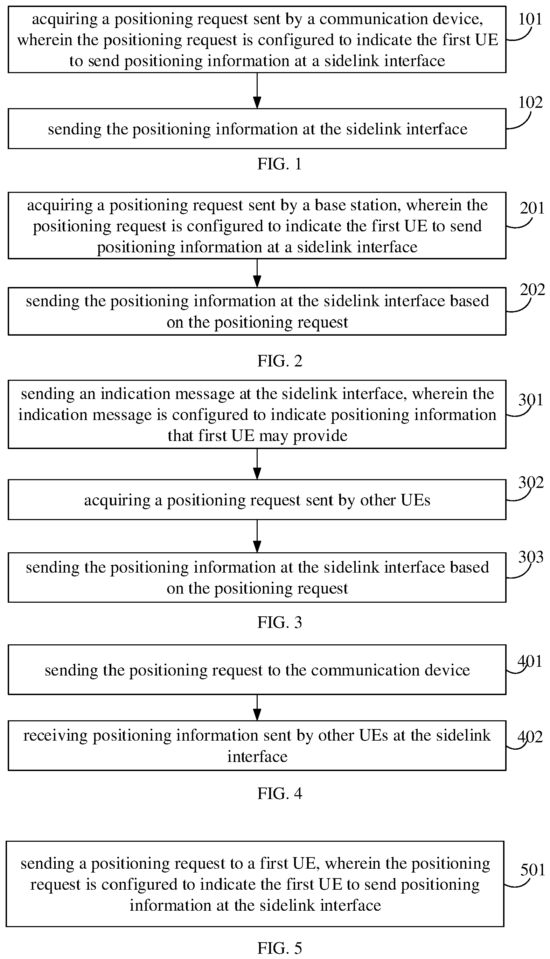

FIG. 1 is a flowchart illustrating a positioning method according to an embodiment of the present disclosure. The positioning method is applicable to a first user equipment (UE).

As illustrated in FIG. 1, the method includes the following steps.

At step 101, a positioning request sent by a communication device is acquired. The positioning request is configured to indicate the first UE to send positioning information at a sidelink interface.

The communication device may be any one of a second UE, a base station and a location management function (LMF) server.

It may be understood that the positioning request may be in the form of a signal or a message, which is not limited in the present disclosure.

The positioning request may include at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request. Different message names correspond to different positioning information.

The identifier of the communication device may be in a variety of forms. In some embodiments, the identifier of the communication device may be a UE1, a UE3, a base station a, a base station C, a LMF1, a LMF5A, etc., which represents the uniqueness of the communication device, which is not limited in the present disclosure.

In addition, there may be a variety of types of positioning information. In some embodiments, the positioning information may be positioning assistance data of a global navigation satellite system (GNSS). In some embodiments, the positioning information may also be particular data of a GNSS positioning assistance data center, such as GNSS reference time assistance data and GNSS reference position assistance data, which are not limited in the present disclosure.

In addition, the identifier of the positioning information may represent the uniqueness of the positioning information, i.e., may indicate whether it is positioning assistance information, a positioning pilot signal or other positioning information, which is not limited in the present disclosure.

It may be understood that there may be a variety of sending modes of positioning information, such as unicast, multicast or broadcast, which are not limited in the present disclosure.

In addition, the sending duration of the positioning information may be any duration, such as 10 ms, ls, which is not limited in the present disclosure.

It may be understood that the sending period of the positioning information may be set based on actual needs, such as sending the positioning information every 5 minutes, or every 3 minutes, which is not limited in the present disclosure.

In addition, a resource index number corresponding to the positioning information may be a preset content. There may be a variety of resources, such as a time domain, a frequency domain and a space domain, which are not limited in the present disclosure.

It may be understood that there may be one or more request message names, such as a message 2, a message A and a message d. Different message names may correspond to different positioning information. In some embodiments, the message name is the message 2, and may correspond to assistance information related to a positioning pilot signal sent at an NR-RAN node. Alternatively, the message name is the message A, and may correspond to assistance information related to a positioning pilot signal sent at a wireless interface (a Uu interface). In some embodiments, the message name is the message d, and may correspond to assistance information related to a positioning pilot signal sent at a sidelink interface.

It may be understood that the positioning request may include a message name, or a plurality of message names, which is not limited in the present disclosure.

In addition, the positioning information includes at least one of: positioning assistance information or a positioning pilot signal.

The positioning assistance information may be configured to assist the communication device in a positioning-related process, for example, informing the communication device, monitoring a time domain/frequency domain position of the positioning pilot signal.

In addition, when the positioning request is in the form of a signal, the positioning request may be a specified signal. The specified signal may correspond to at least one of: a type of the positioning information, a message including the positioning information or a resource corresponding to the positioning information.

It may be understood that the specified signal and related positioning information corresponding to the specified signal may be agreed by the UE and the communication device in advance. In some embodiments, when the positioning request is a specified signal 1, the positioning request may correspond to GNSS related assistance information. In some embodiments, when the positioning request is a specified signal 2, the positioning request may correspond to assistance information related to the positioning pilot signal sent at the NR-RAN node, etc. It is not limited in the present disclosure.

For example, the positioning request sent by the communication device acquired by the UE may be in the form of a message, and may include LMF and GNSS related assistance information. Then, the UE may rapidly send the GNSS related assistance information at the sidelink interface based on the positioning request to the LMF.

In some embodiments, the positioning request sent by the communication device acquired by the UE may be the specified signal 2. As agreed, the specified signal 2 corresponds to assistance information related to the positioning pilot signal sent at the NR-RAN node, and the UE may rapidly send the assistance information related to the positioning pilot signal sent at the NR-RAN node to the surrounding in the form of broadcast at the sidelink interface based on the positioning request. In some embodiments, the assistance information related to the positioning pilot signal sent at the NR-RAN node may be sent to the surrounding in the form of multicast.

It should be noted that the above examples are illustrative only and are not intended to be a limitation of the positioning request, the positioning information content and the sending mode in the embodiments of the present disclosure.

At step 102, the positioning information is sent at the sidelink interface.

The positioning information may include at least one of: positioning assistance information or a positioning pilot signal, which is not limited in the present disclosure.

In some embodiments, the UE may send related positioning information at the sidelink interface based on an acquired positioning request and information carried in the positioning request.

Further, the UE may also send positioning information required by the base station at the sidelink interface based on the sending mode, the resource used for sending, the sending duration and/or the sending period carried in the positioning request.

In some embodiments, the UE may send a positioning pilot signal at the sidelink interface as required based on the acquired positioning request and the information carried in the positioning request.

In some embodiments, the positioning request acquired by the UE may be "a request to send a positioning pilot signal 2 at the sidelink interface" so that the positioning pilot signal 2 may be sent at the sidelink interface based on the positioning request.

In some embodiments, the UE may only send positioning pilot signals in certain beam directions at the sidelink interface based on the acquired positioning request.

Further, the positioning pilot signal required by the base station may be further sent based on the sending mode, the resource used for sending, the sending duration and/or the sending period carried in the request message.

It should be noted that the above examples are illustrative only and are not intended to be a limitation of sending the positioning information at the sidelink interface in the embodiments of the present disclosure.

In the embodiments in the present disclosure, the positioning request sent by the communication device is acquired. The positioning request is configured to indicate the first UE to send the positioning information at the sidelink interface, and the positioning information may be then sent at the sidelink interface, so that resources at the sidelink interface in the UE are saved, and the positioning efficiency at the sidelink interface is greatly improved.

Taking the communication device being a base station for an example, the positioning method in the present disclosure is further described in combination with FIG. 2.

At step 201, a positioning request sent by a base station is acquired. The positioning request is configured to indicate the first UE to send positioning information at a sidelink interface.

At step 202, the positioning information is sent at the sidelink interface based on the positioning request.

It needs to be noted that, the content related to the positioning request may refer to descriptions of other embodiments, which is not limited in the disclosure.

In addition, the positioning information may be positioning assistance information or positioning pilot signal information, which is not limited in the present disclosure.

For example, the positioning request sent by the base station acquired by the UE may be "a request to send positioning assistance information".

In some embodiments, the positioning request may carry a type of positioning assistance information sent by the request, and may be one or more types of positioning assistance information, which is not limited in the present disclosure.

In some embodiments, the positioning request may also be a request for the UE to send GNSS positioning assistance data, or a request for the UE to send certain particular data in the GNSS positioning assistance data (such as GNSS reference time assistance data and assistance data of GNSS earth azimuth parameters). Alternatively, the positioning request may be a request for the UE to send assistance information related to the positioning pilot signal sent at the NR-RAN node; or a request to send assistance information related to the positioning pilot signal at the Uu interface; or a request to send assistance information related to the positioning pilot signal sent at the sidelink interface, which is not limited in the present disclosure.

Alternatively, the positioning request may include a message name of the request. It may be understood that different message names correspond to different positioning information. The positioning request may include a message name, and in some embodiments, may include a plurality of message names, which is not limited in the present disclosure.

In some embodiments, a message 1 may include GNSS related assistance information, a message 2 may include assistance information related to the positioning pilot signal sent at the NR-RAN node, a message 3 may include assistance information related to the positioning pilot signal at the Uu interface; and a message 4 may include assistance information related to the positioning pilot signal sent at the sidelink interface. The positioning request sent by the base station acquired by the UE may be a request to send the message 1. In some embodiments, the positioning request sent by the base station acquired by the UE may also be a request to send the message 1, the message 2 and the message 4, which is not limited in the present disclosure.

In addition, the positioning request may also include a sending mode, and may be broadcast, multicast or a dedicated channel, which is not limited in the present disclosure.

It may be understood that the positioning request may further include resources used for sending, which may be a time domain, a frequency domain and/or a space domain, which are not limited in the present disclosure.

In some embodiments, the UE may send related positioning information at the sidelink interface by acquiring "a request to send positioning assistance information" sent by the base station and information carried in the request.

It should be noted that "a request to send positioning assistance information" is illustrative only and is not intended to be a limitation of the positioning information sent by the base station in the embodiments of the present disclosure.

Further, the UE may further send positioning information required by the base station at the sidelink interface based on the sending mode, the resource used for sending, the sending duration and/or the sending period carried in the positioning request.

In the embodiments of the present disclosure, the UE may send positioning assistance information when the positioning assistance information is needed after acquiring the positioning request sent by the base station, thereby saving an overhead at the sidelink interface and improving the efficiency.

In addition, the positioning request may be a positioning pilot signal. In some embodiments, the positioning request sent by the base station acquired by the UE may be "a request to send the positioning pilot signal at the sidelink interface".

Further, the positioning request may carry an identifier of the positioning pilot signal sent by the request. In some embodiments, the identifier of the positioning pilot signal in the positioning request acquired by the UE may be 1, and may indicate that the UE may send the positioning pilot signal with the identifier of 1 at the sidelink interface.

It should be noted that the above identifier 1 is illustrated only and is not intended to be a limitation of the identifier of the positioning pilot signal in the embodiments of the present disclosure.

In addition, the positioning request may further carry a type of the positioning pilot signal sent by the request. In some embodiments, one or more types of positioning pilot signals that may be sent at the sidelink interface may be defined. Different positioning pilot signals may satisfy different application scenarios. In some embodiments, the positioning pilot signal 1 is applicable to a commercial indoor scenario, and the positioning pilot signal 2 is applicable to an industrial deployment scenario, etc. When the base station currently needs the industrial deployment scenario, the positioning request sent by the base station acquired by the UE may be "a request to send the positioning pilot signal 2 at the sidelink interface", which is not limited in the disclosure.

In addition, the positioning request may further carry a beam direction of the positioning pilot signal sent by the request. In some embodiments, when the UE may send the positioning pilot signal at the sidelink interface by means of beam scanning, the positioning request sent by the base station acquired by the UE may be "a request for the UE to send the positioning pilot signal only in a particular beam or a particular set of some beams", thereby reducing the overhead of the positioning pilot signal and reducing reception of beams monitored by the UE.

It should be noted that the above examples are illustrative only and are not intended to be a limitation of the positioning information content in the embodiments of the present disclosure.

It may be understood that the positioning request may further include resources used for sending (which for example, may be a time domain, a frequency domain and/or a space domain), a sending duration and a sending period, which are not limited in the present disclosure.

Then, the UE may send the positioning pilot signal at the sidelink interface as required based on the positioning request sent by the base station and the information carried in the positioning request.

In some embodiments, the UE may send the positioning pilot signal 2 at the sidelink interface based on the acquired "request to send the positioning pilot signal 2 at the sidelink interface" sent by the base station.

In some embodiments, the UE may only send positioning pilot signals in certain beam directions at the sidelink interface based on the acquired positioning request.

Further, the positioning pilot signal required by the base station may be also sent based on the sending mode, the resource used for sending, the sending duration and/or the sending period carried in the request message.

In the embodiments of the present disclosure, the overhead of sending the positioning pilot signal at the sidelink interface may be saved, and a range of the positioning pilot signal monitored by the UE may be reduced, thereby improving the efficiency.

In addition, when the communication device is a base station or a location management function (LMF) server, the positioning request may further include positioning information.

It may be understood that the positioning information may be acquired by the UE in advance and stored in the UE, and in some embodiments, may be sent by the base station or the LMF in the positioning request to the UE. The base station may send the positioning information to the UE by one or more positioning requests, which is not limited in the disclosure.

It needs to be noted that a communication device (base station) in the embodiments of the present disclosure may replaced with the LMF, which is not limited in the present disclosure.

In the embodiments in the present disclosure, the first UE acquires a positioning request sent by the base station. The positioning request is configured to indicate the first UE to send positioning information at the sidelink interface, and the positioning information may be sent at the sidelink interface based on the positioning request, so that resources at the sidelink interface in the UE are saved, and the positioning efficiency at the sidelink interface is greatly improved.

In a possible implementation, the UE may further send an indication message related to positioning that the UE may provide, so that when other UEs surrounding the UE have a positioning requirement, a positioning request may be sent to the UE, which is described in combination with FIG. 3.

At step 301, an indication message is sent at the sidelink interface. The indication message is configured to indicate positioning information that first UE may provide.

The indication message may include at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of the positioning information corresponding to each positioning request signal, a resource of the positioning information corresponding to each positioning request signal or a resource index number of the positioning information corresponding to each positioning request signal.

In addition, there may be a variety of sending modes, such as a dedicated channel, unicast, multicast and broadcast, which are not limited in the present disclosure.

In addition, the positioning information that the UE may provide may be a type of positioning assistance information, and there may be one or more types of positioning assistance information, which is not limited in the present disclosure.

In some embodiments, the UE may inform a surrounding UE that the UE itself may provide GNSS positioning assistance data. Alternatively, the UE may inform the surrounding UE that the UE itself may provide certain particular data in the GNSS positioning assistance data (such as GNSS reference time assistance data and GNSS reference positioning assistance data). Alternatively, the UE may inform the surrounding UE that the UE itself may provide assistance information related to the positioning pilot signal sent at the NR-RAN node. Alternatively, the UE may inform the surrounding UE that the UE itself may provide assistance information related to the positioning pilot signal sent by the UE at the Uu interface. Alternatively, the UE may inform the surrounding UE that the UE itself may provide assistance information related to the positioning pilot signal sent by the UE at the sidelink interface, which is not limited in the present disclosure.

In addition, the positioning information that the UE may provide may also be in the form of a message. For example, a message 1 includes GNSS related assistance information, a message 2 includes assistance information related to the positioning pilot signal sent at the NR-RAN node, a message 3 includes assistance information related to the positioning pilot signal at the Uu interface; and a message 4 includes assistance information related to the positioning pilot signal sent at the sidelink interface. When the UE stores the message 1 and the message 4, contents of the message 1 and the message 4 may be informed to the surrounding UE at the sidelink interface, which are not limited in the present disclosure.

It may be understood, the UE may further provide whether to send at the sidelink interface and a sending mode which may be broadcast, multicast or unicast, which are not limited in the present disclosure.

In addition, the UE may further provide a corresponding relationship between a positioning request signal and a type of positioning assistance information, or a corresponding relationship between a positioning request signal and a message corresponding to the positioning assistance information. For example, a positioning request signal 1 corresponds to GNSS reference time assistance data, and a positioning request signal 2 corresponds to GNSS reference positioning assistance data. Alternatively, a positioning request signal 3 corresponds to GNSS positioning assistance data, and a positioning request signal 4 corresponds to assistance information related to the positioning pilot signal sent at the NR-RAN node, which are not limited in the present disclosure.

In some embodiments, the information of the positioning signal that the UE may provide may be GNSS related assistance information that may be sent at the sidelink interface, such as the GNSS reference time assistance data or the GNSS positioning assistance data. The UE may send information of the positioning signal that the UE itself may provide to the surrounding in the form of broadcast at the sidelink interface.

It should be noted that the above examples are illustrative only and are not intended to be a limitation of the positioning information that the first UE may provide in the embodiments of the present disclosure.

In some embodiments, an indication message sent by the UE at the sidelink interface may further be a positioning pilot signal. Alternatively, the UE may inform other surrounding UEs of related information to the positioning pilot signal that the UE may send.

In some embodiments, the UE may inform the other surrounding UEs that the positioning pilot signal may be sent at the sidelink interface.

In some embodiments, the UE may inform the other surrounding UEs that a type of the positioning pilot signal may be sent at the sidelink interface. In some embodiments, one or more types of positioning pilot signals sent at the sidelink interface may be defined. Different positioning pilot signals satisfy different application scenarios. In some embodiments, the positioning pilot signal 1 is applicable to a commercial indoor scenario, and the positioning pilot signal 2 is applicable to an industrial deployment scenario, which are not limited in the present disclosure.

In some embodiments, the UE may inform the other surrounding UEs that there may be one or more sets of resource configurations of the positioning pilot signal sent at the sidelink interface. In some embodiments, a set of resource configurations of the positioning pilot signal (denoted as a configuration 1) may be defined, which corresponds to configurations of positioning pilot signals with a dense period and/or a large bandwidth; a set of resource configurations of the positioning pilot signal (denoted as a configuration 2) may be defined, which corresponds to configurations of positioning pilot signals with a sparse period and/or a small bandwidth, which are not limited in the present disclosure.

In some embodiments, the UE may inform the other surrounding UEs of a relationship between positioning pilot signals and types and/or resource configurations of the positioning request signals. In some embodiments, the positioning request signal 1 corresponds to the positioning pilot signal 1, and the positioning request signal 2 corresponds to the positioning pilot signal 2. Alternatively, the positioning request signal 1 corresponds to the positioning pilot signal 1 in the configuration 1, and the positioning request signal 2 corresponds to the positioning pilot signal 1 in the configuration 2, which are not limited in the present disclosure.

It should be noted that the above examples are illustrative only and are not intended to be a limitation of sending the indication message at the sidelink interface in the embodiments of the present disclosure.

At step 302, a positioning request sent by other UEs is acquired.

There may be one or more other UEs in some embodiments, which are not limited in the present disclosure.

In the embodiments of the present disclosure, when the positioning request sent by other UE (one) is acquired, corresponding positioning information may be sent based on the positioning request. When different positioning requests are acquired from a plurality of other UEs, the different positioning requests may be received at the same moment based on different links or different channels, and in some embodiments, the different positioning requests may be received at different moments, which are not limited in the present disclosure.

In addition, the positioning request may be a specified signal. The specified signal may correspond to at least one of: a type of the positioning information, a message including the positioning information or a resource corresponding to the positioning information.

The specified signal and the corresponding content may be agreed by the UE and the communication device in advance. In some embodiments, it has been agreed that a signal 1 corresponds to GNSS reference time assistance data, and a signal 2 corresponds to GNSS positioning assistance data, which are not limited in the present disclosure.

For example, the acquired positioning request may be "a request to send positioning assistance information".

The positioning request may be one signal. Further, the positioning request may be a corresponding request signal sent in combination with its own requirement based on a corresponding relationship between a positioning request signal and a type of positioning assistance information, or a corresponding relationship between a positioning request signal and a message corresponding to the positioning assistance information. In some embodiments, other UEs are expected to receive GNSS positioning assistance data, in which case, the other UEs may send a request to the UE by using the request signal 1, and the positioning request acquired by the UE may be the request signal 1, which are not limited in the present disclosure.

Alternatively, the positioning request may be one message. Further, the positioning request may carry a type of positioning assistance information sent by the request, and there may be one or more types of positioning assistance information. In some embodiments, the positioning request may be a request for the UE to send GNSS positioning assistance data, or a request for the UE to send GNSS reference time assistance data or assistance data of GNSS earth azimuth parameters, etc. Alternatively, the positioning request may be a request for the UE to send assistance information related to the positioning pilot signal sent at the NR-RAN node. Alternatively, the positioning request may be a request to send assistance information related to the positioning pilot signal sent at the Uu interface, or a request to send assistance information related to the positioning pilot signal sent at the sidelink interface, which is not limited in the present disclosure.

It may be understood that, the positioning request may further include a sending mode, which for example, may be broadcast, multicast or unicast, which is not limited in the present disclosure.

In addition, the positioning request may further include a sending duration, and a sending period, which is not limited in the present disclosure.

At step 303, the positioning information is sent at the sidelink interface based on the positioning request.

The UE may send related positioning assistance information at the sidelink interface based on the acquired positioning request and the information carried in the request. Further, the UE may send positioning assistance information required in the positioning request based on the sending mode, the resource used for sending, the sending duration and/or the sending period carried in the request message.

In some embodiments, when the request is sent, the required positioning assistance information is monitored.

In the embodiments of the present disclosure, the UE may send positioning information at the sidelink interface based on the acquired positioning request, which may save the overhead of sending the positioning assistance information on the sidelink and improve the efficiency.

In some embodiments, the UE may send a positioning pilot signal at the sidelink interface as required based on the acquired positioning request and the information carried in the request. As a possible implementation, the UE may determine information such as a type of the positioning pilot signal type and a resource used based on positioning requests of a plurality of other surrounding UEs and contents in the positioning requests, and send the positioning pilot signal at the sidelink interface.

In some embodiments, the UE may send the positioning pilot signal 2 at the sidelink interface based on the acquired positioning request. Alternatively, the UE may send positioning pilot signals only in certain beam directions at the sidelink interface based on the acquired positioning request. Further, the UE may further send a required positioning pilot signal based on the sending mode, the resource used for sending, the sending duration and/or the sending period carried in the positioning request.

It should be noted that the above examples are illustrative only and are not intended to be a limitation of sending the positioning pilot signal in the embodiments of the present disclosure.

In some embodiments, when the UE sends the positioning request, the required positioning pilot signal may be monitored.

In the embodiments of the present disclosure, the overhead of sending the positioning pilot signal at the sidelink may be saved, and reception of beams monitored by the UE may be reduced, which improves the efficiency.

In the embodiments of the present disclosure, an indication message is sent at the sidelink interface. The indication message is configured to indicate positioning information that the first UE may provide. Then, a sending request sent by the communication device is acquired, and positioning information is sent at the sidelink interface based on the positioning request. Therefore, resources at the sidelink interface in the UE may be further saved, and the positioning efficiency at the sidelink interface may be greatly improved.

In a possible implementation, when the current UE does not store related positioning information, a sending request may be sent to the communication device when positioning is required. The above process is further described in combination with FIG. 4.

At step 401, the positioning request is sent to the communication device.

The communication device may be a UE, a base station and a location management function (LMF) server.

The positioning request may be a message or a signal in some embodiments, which is not limited in the present disclosure.

In the embodiments of the present disclosure, when the current UE does not have related positioning information, the positioning request may be sent to other communication devices when positioning is required.

In some embodiments, the current UE may directly send "GNSS positioning assistance data is needed" to the communication device. In some embodiments, a corresponding signal may be sent based on a corresponding relationship between signals and pieces of positioning information that is agreed in advance. In some embodiments, a signal 1 corresponds to assistance information related to the positioning pilot signal sent at the NR-RAN node, and a message 2 may include assistance information related to the positioning pilot signal sent at the sidelink interface. When the current UE needs the assistance information related to the positioning pilot signal sent at the NR-RAN node, the signal 1 may be directly sent to the communication device.

It should be noted that the above examples are illustrative only and are not intended to be a limitation of sending the positioning request to the communication device in the embodiments of the present disclosure.

In some embodiments, when the communication device is other UE, the other UE may may send corresponding positioning information to the current UE at the sidelink interface based on the acquired positioning request.

In some embodiments, when the communication device is a base station, the base station may forward the acquired positioning request to other surrounding UEs, and the other surrounding UEs may send the positioning information to the current UE. In some embodiments, the base station may directly send the corresponding positioning information to the current UE based on the acquired positioning request, which is not limited in the present disclosure.

In some embodiments, when the communication device is a LMF, the LMF may forward the acquired positioning request to other surrounding UEs, and the other surrounding UEs may send the positioning information to the current UE. In some embodiments, the LMF may directly send corresponding positioning information to the current UE based on the acquired positioning request, which is not limited in the present disclosure.

At step 402, positioning information sent by other UEs is received at the sidelink interface.

The base station and the LMF may send a corresponding positioning request to the other UEs, so that the current UE may receive positioning information sent by the other UEs at the sidelink interface.

In the embodiments of the present disclosure, the UE may send the positioning request to the communication device, and receive the positioning information sent by the other UEs at the sidelink interface, so that the current UE may locate based on the received positioning information. FIG. 5 is a flowchart illustrating a positioning method according to another embodiment of the present disclosure. The positioning method is applicable to a communication device.

As illustrated in FIG. 5, the method includes the following steps.

At step 501, a positioning request is sent to a first user equipment (UE). The positioning request is configured to indicate the first UE to send positioning information at the sidelink interface.

The communication device may be any one of a second UE, a base station and a location management function (LMF) server, which is not limited in the present disclosure.

It may be understood that the positioning request may be in the form of a signal, or a message, which is not limited in the present disclosure.

The positioning request may include at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request. Different message names correspond to different positioning information.

The identifier of the communication device may be in a variety of forms. In some embodiments, the identifier of the communication device may be a UE1, a UE3, a base station a, a base station C, a LMF server 1 or a LMF 5A, etc., which represents the uniqueness of the communication device, which is not limited in the present disclosure.

In addition, there may be a variety of types of the positioning information. For example, the positioning information may be GNSS positioning assistance data. In some embodiments, the positioning information may be certain particular data of a GNSS positioning assistance data center, which are not limited in the present disclosure.

In addition, the identifier of the positioning information may represent the uniqueness of the positioning information, i.e., may indicate whether it is positioning assistance information, a positioning pilot signal or other positioning information, which is not limited in the present disclosure.

It may be understood that there may be a variety of sending modes of positioning information, such as unicast, multicast or broadcast, which are not limited in the present disclosure.

In addition, the sending duration of the positioning information may be any duration, such as 5 ms, 1.5s, which is not limited in the present disclosure.

It may be understood that the sending period of the positioning information may be set based on actual needs, such as sending the positioning information every 3 minutes, or every 1 minute, which is not limited in the present disclosure.

In addition, a resource index number corresponding to the positioning information may be a preset content. There may be a variety of resources, such as a time domain, a frequency domain and a space domain, which are not limited in the present disclosure.

It may be understood that there a plurality of request message names, such as a message 2, a message A and a message d. Different message names may correspond to different positioning information. In some embodiments, the message name is the message 2, and may correspond to assistance information related to a positioning pilot signal sent at an NR-RAN node. In some embodiments, the message name is the message A, and may correspond to assistance information related to a positioning pilot signal sent at the Uu interface. In some embodiments, the message name is the message d, and may correspond to assistance information related to the positioning pilot signal sent on the sidelink interface.

In addition, the positioning request may sequentially include a message name, or a plurality of message names, which is not limited in the present disclosure.

It may be understood that the positioning request is in the form of a signal, and each signal and positioning information corresponding to each signal may be agreed by a first UE and the communication device in advance. In some embodiments, when the positioning request is a signal 1, the positioning request may correspond to GNSS related assistance information. In some embodiments, when the positioning request is a signal 2, the positioning request may correspond to assistance information related to a positioning pilot signal sent at the NR-RAN node, which is not limited in the present disclosure
In addition, the positioning information includes at least one of: positioning assistance information or a positioning pilot signal.

The positioning assistance information may be configured to assist the communication device in a positioning-related process, for example, informing the communication device, monitoring a time domain/frequency domain position of the positioning pilot signal.

For example, when the communication device needs to acquire the GNSS related assistance information, a GNSS related positioning request may be sent to the first UE. In some embodiments, as agreed in advance, the signal 1 corresponds to the GNSS related assistance information, and the signal 2 corresponds to the assistance information related to a positioning pilot signal sent at the NR-RAN node. The communication device may send the signal 2 to the first UE.

It should be noted that the above examples are illustrative only and are not intended to be a limitation of the positioning request in the embodiments of the present disclosure.

In the embodiments of the present disclosure, the communication device sends the positioning request to the first UE. The positioning request is configured to indicate the first UE to send positioning information at the sidelink interface. Therefore, resources at the sidelink interface in the UE are saved, and the positioning efficiency at the sidelink interface is greatlyimproved.

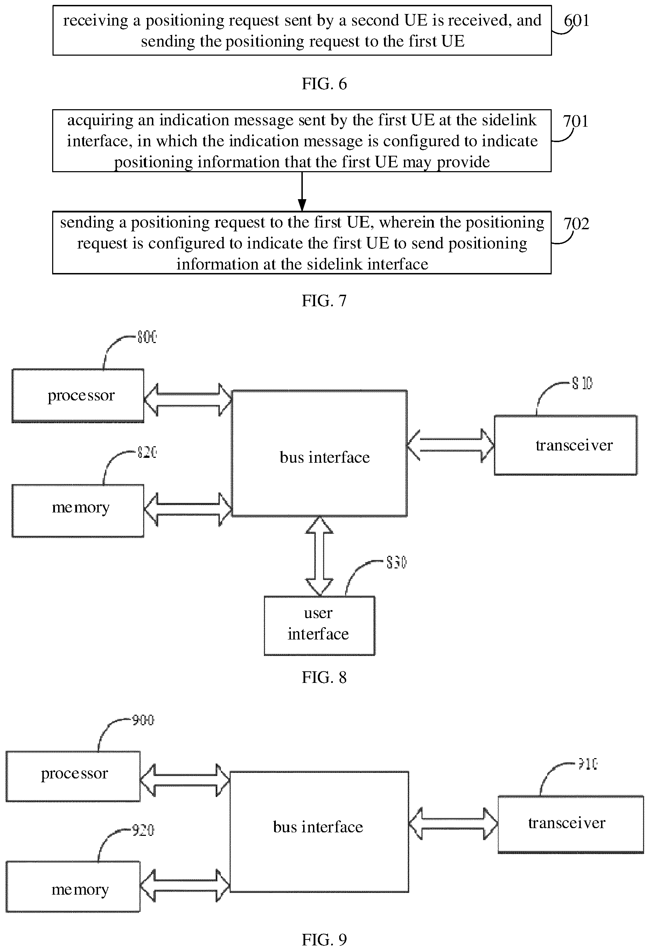

Taking the communication device being a base station for an example, the positioning method in the present disclosure is further described in combination with FIG. 6.

At step 601, a positioning request sent by a second UE is received, and sent to the first UE.

The base station may determine that there is a sidelink positioning requirement within a certain range of the current base station when receiving the requirement sent by the second UE, so that the positioning request may be sent to the first UE.

For example, the positioning request sent by the second UE may be "a request to send positioning assistance information".

In some embodiments, the positioning request may carry a type of positioning assistance information sent by the request, and may be one or more types of positioning assistance information sent by the request, which is not limited in the present disclosure.

In addition, the positioning request may also be a request for the first UE to send GNSS positioning assistance data, or a request for the first UE to send certain particular data of the GNSS positioning assistance data (such as GNSS reference time assistance data, assistance data of GNSS earth azimuth parameters). Alternatively, the positioning request may be a request for the first UE to send assistance information related to the positioning pilot signal sent at the NR-RAN node; or a request to send assistance information related to the positioning pilot signal sent at the Uu interface; or a request to send assistance information related to the positioning pilot signal sent at the sidelink interface, which is not limited in the present disclosure.

Alternatively, the positioning request may include a message name of the request. It may be understood that different message names correspond to different positioning information. The positioning request may include a message name, and in some embodiments, may include a plurality of message names, which is not limited in the present disclosure.

In some embodiments, a message 1 may include GNSS related assistance information, a message 2 may include assistance information related to the positioning pilot signal sent at the NR-RAN node, a message 3 may include assistance information related to the positioning pilot signal at the Uu interface; and a message 4 may include assistance information related to the positioning pilot signal sent at the sidelink interface. The positioning request sent by the base station to the first UE may be a request to send the message 1. In some embodiments, the positioning request sent by the base station to the first UE may also be a request to send the message 1, the message 2 and the message 4, which is not limited in the present disclosure.

In addition, the positioning request may further include a sending mode, and may be broadcast, multicast or a dedicated channel, which is not limited in the present disclosure.

It may be understood that the positioning request may further include resources used for sending, which may be a time domain, a frequency domain, and/or a space domain, which are not limited in the present disclosure.

In addition, the positioning request may be a positioning pilot signal. In some embodiments, the positioning request sent by the second UE acquired by the base station, may be "a request to send the positioning pilot signal at the sidelink interface".

Further, the positioning request may carry an identifier of the positioning pilot signal sent by the request. In some embodiments, when the identifier of the positioning pilot signal in the positioning request acquired by the base station may be 1, the positioning request may be sent to the first UE.

It should be noted that the above identifier 1 is illustrated only and is not intended to be a limitation of the identifier of the positioning pilot signal in the embodiments of the present disclosure.

In addition, the positioning request may further carry a type of the positioning pilot signal sent by the request. In some embodiments, one or more positioning pilot signals sent at the sidelink interface may be defined. Different positioning pilot signals may satisfy different application scenarios. In some embodiments, the positioning pilot signal 1 is applicable to a commercial indoor scenario, and the positioning pilot signal 2 is applicable to an industrial deployment scenario, etc.

It needs to be noted that, the content that may be carried in the positioning request, may refer to descriptions of other embodiments, which is not limited in the disclosure.

It may be understood that, the positioning request may be a specified signal. The specified signal corresponds to at least one of: a type of the positioning information, a message including the positioning information or a resource corresponding to the positioning information.

In some embodiments, the specified signal may be a request signal 1, which corresponds to GNSS reference time assistance data. In some embodiments, the specified signal is a request signal 2, which corresponds to GNSS reference positioning assistance data. In some embodiments, the specified signal is a request signal 3, which corresponds to GNSS positioning assistance data. In some embodiments, the specified signal is a request signal 4, which corresponds to assistance information related to the positioning pilot signal sent at the NR-RAN node, which is not limited in the present disclosure.

It needs to be noted that, the specific description of positioning request beinga specified signal may refer to descriptions of other embodiments, which is not limited in the disclosure.

In addition, when the communication device is a base station or a LMF server, the positioning request may further include positioning information.

It may be understood that the positioning information may be acquired by the first UE in advance and stored in the first UE. In some embodiments, the positioning information may be sent by the base station or the LMF server in the positioning request to the first UE. The base station or the LMF server may send the positioning information to the UE by one or more positioning requests, which is not limited in the disclosure.

It needs to be noted that the communication device (base station) in the embodiments of the present disclosure may be replaced with the LMF, which is not limited in the present disclosure.

It may be understood that the base station may determine that the current sidelink positioning requirement is large based on its own algorithm, and may send the positioning request to the first UE. In some embodiments, the base station may acquire the positioning request sent by the LMF server, and determine that the first UE is needed to send assistance positioning information, so that a sending request may be sent to the first UE. It is not limited in the present disclosure.

In some embodiments, the positioning request sent by the LMF server received by the base station may be assistance data of GNSS earth azimuth parameters sent in the form of broadcast every 2 minutes, and the base station may send the positioning request to the first UE.

In some embodiments, the base station acquires the positioning request sent by the LMF server, and the positioning request may be assistance information related to the positioning pilot signal sent at the NR-RAN node in the form of broadcast every 3 minutes, and the base station may send the positioning request to the first UE.

It should be noted that the above examples are illustrative only and are not intended to be a limitation of the positioning request in the embodiments of the present disclosure.

In the embodiments of the present disclosure, a positioning request sent by the second UE is received, and sent to the first UE, which saves resources at the sidelink interface in the UE, and greatly improves the positioning efficiency at the sidelink interface.

Taking the communication device being a UE for an example, the positioning method in the present disclosure is further described in combination with FIG. 7.

At step 701, an indication message sent by the first UE at the sidelink interface is acquired. The indication message is configured to indicate positioning information that the first UE may provide.

The indication message may include at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

It needs to be noted that, the specific description of the indication message may refer to descriptions of other embodiments, which is not limited in the disclosure.

At step 702, a positioning request is sent to the first UE. The positioning request is configured to indicate the first UE to send positioning information at the sidelink interface.

The positioning request may be a message or a signal, which is not limited in the present disclosure.

For example, the positioning request sent by the first UE may be "a request to send positioning assistance information".

The positioning request may be a signal. Further, the positioning request may be a corresponding request signal sent by the UE in combination with its own requirement based on a corresponding relationship between a positioning request signal and a type of positioning assistance information, or a corresponding relationship between a positioning request signal and a message corresponding to the positioning assistance information. In some embodiments, the UE is expected to receive GNSS positioning assistance data, in which case, the UE may send a request to the first UE by using the request signal 1, which is not limited in the present disclosure.

Alternatively, the positioning request may be one message. Further, the positioning request may carry a type of positioning assistance information sent by the request, and there may be one or more types of positioning assistance information. In some embodiments, the positioning request may may be a request for the UE to send GNSS positioning assistance data, or a request for the UE to send GNSS reference time assistance data or assistance data of GNSS earth azimuth parameters. Alternatively, the positioning request may be a request for the UE to send assistance information related to the positioning pilot signal sent at the NR-RAN node. Alternatively, the positioning request may be a request to send assistance information related to the positioning pilot signal at the Uu interface, or a request to send assistance information related to the positioning pilot signal sent at the sidelink interface, which is not limited in the present disclosure.

It may be understood that, the positioning request may further include a sending mode, and for example, may be broadcast, multicast or unicast, which is not limited in the present disclosure.

In addition, the positioning request may further include a sending duration, and a sending period, which is not limited in the present disclosure.

In addition, the UE may further send the positioning pilot signal to the first UE.

In some embodiments, when the UE has a sidelink positioning requirement, the UE may send the positioning pilot signal to the first UE. Further, the UE may determine a specific positioning request signal to be sent based on the required positioning pilot type and/or configuration, etc. For example, the request signal 1 corresponds to the positioning pilot signal 1, and the UE is expected to receive the positioning pilot signal 1, in which case, the UE may send the request signal 1 to the first UE, which is not limited in the present disclosure.

In some embodiments, the UE sends the positioning request that is "a request to send the positioning pilot signal at the sidelink interface" to the first UE.

Further, the positioning request may carry one or more types of pieces of information. In some embodiments, the positioning request may carry a type of the positioning pilot signal sent by the request. For example, the UE is expected to receive the positioning pilot signal 2, and may request the first UE to send the positioning pilot signal 2 at the sidelink interface.

In some embodiments, the positioning request may carry a beam direction of the positioning pilot signal sent by the request. In some embodiments, the first UE may send the positioning pilot signal by means of beam scanning at the sidelink interface, and the UE may monitor the positioning pilot signal sent by the first UE at the sidelink only on a certain particular beam or certain beams, in which case, the UE may request the first UE to send the positioning pilot signal only on the certain beam or certain beams, thereby reducing the overhead of sending the positioning pilot signal on the sidelink and reducing the beams monitored by the UE.

In some embodiments that the positioning request may further carry resources used for sending, which for example, may be a time domain, a frequency domain and/or a space domain, which are not limited in the present disclosure.

In some embodiments, the positioning request may further carry a sending duration, a sending period and a resource index number sent by the request, which is not limited in the present disclosure.

In the embodiments of the present disclosure, an indication message sent by the first UE at the sidelink interface is acquired. The indication message is configured to indicate positioning information that the first UE may provide. Then, a positioning request is sent to the first UE. The positioning request is configured to indicate the first UE to send positioning information at the sidelink interface. Therefore, resources at the sidelink interface in the UE are saved, and the positioning efficiency at the sidelink interface is greatly improved.

FIG. 8 is a diagram illustrating a structure of a positioning apparatus according to an embodiment of the present disclosure. The positioning apparatus is applicable to a user equipment (UE).

As illustrated in FIG. 8, the positioning apparatus may include a transceiver 800, a processor 810 and a memory 820.

The transceiver 800 is configured to transmit and receive data under a control of the processor 810.

In FIG. 8, a bus architecture may include any number of interconnected buses and bridges, and specifically link various circuits including one or more processors represented by the processor 810 and memories represented by the memory 820. The bus architecture may further link various other circuits such as peripheral equipments, voltage regulators and power management circuits, which are well known in the art. Therefore, it will not be further described herein. A bus interface provides an interface. The transceiver 800 may be a plurality of elements, i.e., include a transmitter and a receiver, and units for communicating with various other apparatuses on transmission media. The transmission media include a wireless channel, a wired channel, an optic cable and other transmission media.

As illustrated in FIG. 8, the positioning apparatus may further include a user interface 830. For different user devices, the user interface 830 may further be an interface capable of externally and internally connecting required devices. The connected devices include, but are not limited to, keyboards, monitors, speakers, microphones, joysticks, etc.

The processor 810 is in charge of managing the bus architecture and general processings, and the memory 820 may store data used by the processor 810 in performing the operations.

In some embodiments, the processor 810 may be a central processing unit (CPU), an application specific integrated circuit (ASIC), a field-programmable gate array (FPGA) or a complex programmable logic device (CPLD). The processor 810 may adopt a multi-core architecture.

The processor 810 calls a computer program stored in the memory and perform the following operations of:
acquiring a positioning request sent by a communication device, in which the positioning request is configured to indicate the first UE to send positioning information at a sidelink interface; and
sending the positioning information at the sidelink interface.

In some embodiments, as another embodiment, the communication device is any one of a second UE, a base station and a location management function (LMF) server.

In some embodiments, as another embodiment, the positioning information includes at least one of: positioning assistance information or a positioning pilot signal.

In some embodiments, as another embodiment, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request. Different message names correspond to different positioning information.

In some embodiments, as another embodiment, the positioning request is a specified signal, and the specified signal corresponds to at least one of: a type of the positioning information, a message including the positioning information or a resource corresponding to the positioning information.

In some embodiments, as another embodiment, the processor is 800 is configured to control the transceiver 800 to: send an indication message sent at the sidelink interface. The indication message is configured to indicate positioning information that the first UE may provide.

In some embodiments, as another embodiment, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of the positioning information corresponding to each positioning request signal, a resource of the positioning information corresponding to each positioning request signal or a resource index number of the positioning information corresponding to each positioning request signal.

In some embodiments, as another embodiment, the communication device is a base station or a LMF server, and the positioning request further includes the positioning information.

In some embodiments, as another embodiment, the processor 810 is configured to control the transceiver 800 to send a positioning request to the communication device.

It needs to be noted that, the positioning apparatus in the embodiments of the present disclosure may implement all the method steps achieved by the method embodiments, and may achieve the same technical effect. The same part in the method embodiments is not repeated in the embodiments of the present disclosure.

FIG. 9 is a diagram illustrating a structure of a positioning apparatus according to an embodiment of the present disclosure. The positioning apparatus is applicable to a communication device.

As illustrated in FIG. 9, the positioning apparatus may include a transceiver 900, a processor 910 and a memory 920.

The transceiver 900 is configured to transmit and receive data under a control of the processor 910.

In FIG. 9, a bus architecture may include any number of interconnected buses and bridges, and specifically link various circuits including one or more processors represented by the processor 910 and memories represented by the memory 920. The bus architecture may further link various other circuits such as peripheral equipments, voltage regulators and power management circuits, which are well known in the art Therefore, it will not be further described herein. A bus interface provides an interface. The transceiver 900 may be a plurality of elements, i.e., include a transmitter and a receiver, and units for communicating with various other apparatuses on transmission media. The transmission media include a wireless channel, a wired channel, an optic cable and other transmission media. The processor 910 is in charge of managing the bus architecture and general processings, and the memory 920 may store data used by processor 910 in performing the operations.

In some embodiments, the processor 910 may be a central processing unit (CPU), an application specific integrated circuit (CPU), a field-programmable gate array (FPGA) or a complex programmable logic device (CPLD). The processor 910 may adopt a multi-core architecture.

The processor 910 calls a computer program stored in the memory and perform the following operations of:
sending a positioning request to a first user equipment (UE). The positioning request is configured to indicate the first UE to send positioning information at a sidelink interface.

In some embodiments, as another embodiment, the positioning information includes at least one of: positioning assistance information or a positioning pilot signal.

In some embodiments, as another embodiment, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, in which different message names correspond to different positioning information.

In some embodiments, as another embodiment, the positioning request is a specified signal, and the specified signal corresponds to at least one of: a type of the positioning information, a message including the positioning information or a resource corresponding to the positioning information.

In some embodiments, as another embodiment, the communication device is any one of a second UE, a base station and a location management function (LMF) server.

In some embodiments, as another embodiment, the communication device is a base station, the positioning request is sent to the first UE, and the processor 910 is configured to control the transceiver 900 to:
receive a positioning request sent by the second UE, and send the positioning request to the first UE; or, receive a positioning request sent by the LMF server, and send the positioning request to the first UE.

In some embodiments, as another embodiment, the positioning request further includes the positioning information.

In some embodiments, as another embodiment, the communication device is the second UE, and the processor 910 is configured to control the transceiver 900 to: acquire an indication message sent by the first UE at the sidelink interface. The indication message is configured to indicate positioning information that the first UE may provide.

In some embodiments, as another embodiment, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

It needs to be noted that, the positioning apparatus in the embodiments of the present disclosure may implement all method steps achieved by method embodiments, and may achieve the same technical effect, and the same part in the method embodiments is not repeated in the embodiments of the present disclosure.

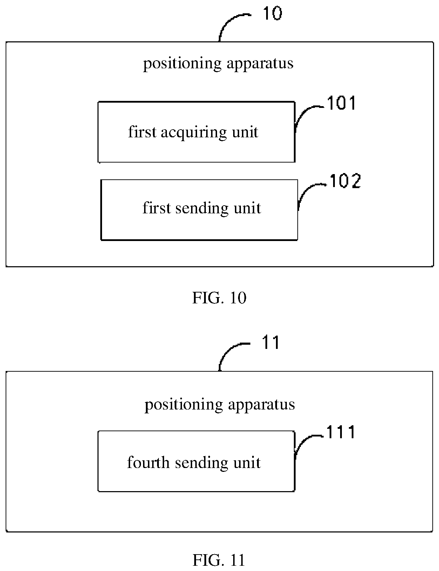

FIG. 10 is a diagram illustrating a structure of a positioning apparatus according to an embodiment of the present disclosure.

As illustrated in FIG. 10, the positioning apparatus is applicable to a first user equipment (UE). The apparatus includes a first acquiring unit 101 and a first sending unit 102.

The first acquiring unit 101 is configured to acquire a positioning request sent by a communication device. The positioning request is configured to indicate the first UE to send positioning information at a sidelink interface.

The first sending unit 102 is configured to send the positioning information at the sidelink interface.

In a possible implementation, the communication device is any one of a second UE, a base station and a location management function (LMF) server.

In a possible implementation, the positioning information includes at least one of: positioning assistance information or a positioning pilot signal.

In a possible implementation, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, in which different message names correspond to different positioning information.

In a possible implementation, the positioning request is a specified signal, and the specified signal corresponds to at least one of: a type of the positioning information, a message including the positioning information or a resource corresponding to the positioning information.

In a possible implementation, the apparatus 10 may further include a second sending unit.

The second sending unit is configured to send an indication message at the sidelink interface. The indication message is configured to indicate positioning information that the first UE may provide.

In a possible implementation, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

In a possible implementation, the communication device is a base station or a LMF server, and the positioning request further includes the positioning information.

In a possible implementation, the apparatus 10 further includes a third sending unit.

The third sending unit is configured to send the positioning request to the communication device.

The functions and specific implementation principles of the each module in the embodiments of the present disclosure may refer to method embodiments, which are not repeated here.

In the positioning apparatus in the embodiments of the present disclosure, the UE acquires the positioning request sent by the base station. The positioning request is configured to indicate the first UE to send positioning information at the sidelink interface. Then, the positioning information is sent at the sidelink interface. The positioning information may be sent at the sidelink interface based on the positioning request, so that resources at the sidelink interface in the UE are saved, and the positioning efficiency at the sidelink interface is greatly improved.

FIG. 11 is a diagram illustrating a structure of a positioning apparatus according to another embodiment of the present disclosure.

As illustrated in FIG. 11, the positioning apparatus is applicable to a communication device. The positioning apparatus 11 includes a fourth sending unit 111.

The fourth sending unit 111 is configured to send a positioning request to a first user equipment (UE). The positioning request is configured to indicate the first UE to send positioning information at a sidelink interface.

In a possible implementation, the positioning information includes at least one of: positioning assistance information or a positioning pilot signal.

In a possible implementation, the positioning request includes at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, in which different message names correspond to different positioning information.

In a possible implementation, the positioning request is a specified signal, and the specified signal corresponds to at least one of: a type of the positioning information, a message including the positioning information or a resource corresponding to the positioning information.

In a possible implementation, the communication device is any one of a second UE, a base station and a location management function (LMF) server.

In a possible implementation, the communication device is a base station, and a positioning request is sent to the first UE. The fourth sending unit is specifically configured to:
receive a positioning request sent by the second UE, and send the positioning request to the first UE; or, receive a positioning request sent by the LMF server, and send the positioning request to the first UE.

In a possible implementation, the positioning request further includes the positioning information.

In a possible implementation, the communication device is a second UE. The apparatus 11 further includes a second acquiring unit.

The second acquiring unit is configured to acquire an indication message sent by the first UE at the sidelink interface. The indication message is configured to indicate positioning information that the first UE may provide.

In a possible implementation, the indication message includes at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

Functions and specific implementation principles of the each module in the embodiments of the present disclosure may refer to each method embodiment as described above, which is not repeated here.

In the positioning apparatus in the embodiments of the present disclosure, the communication device sends the positioning request to the first UE. The positioning request is configured to indicate the first UE to send positioning information at the sidelink interface. Therefore, resources at the sidelink interface in the UE are saved, and the positioning efficiency at the sidelink interface is greatly improved.

It should be noted that, division of units in the embodiments of the present disclosure is illustrative, which is only a logical function division. There may be another division method in the actual implementation. In addition, functional units in the embodiments of the present disclosure may be integrated in a processing unit, or may be physically existed separately, or two or more units may be integrated in one unit. The above integrated unit may be implemented in the form of a hardware or in the form of a software functional unit.

The integrated unit may be stored in a processor readable storage medium if it is implemented in the form of the software function unit as an independent product for selling and using. On the basis of such an understanding, a part essentially contributing to the related art in the technical solution of the present disclosure, or all or part of the technical solution, may be embodied in the form of a software product. The computer software product is stored in a storage medium including several instructions so that a computer device (which may be a personal computer, a server or a network side device) is caused to perform all or part of steps in each method embodiment of the present disclosure. The forgoing storage medium includes a USB disk, a mobile hard disk, a read-only memory (ROM), a random access memory (RAM), a magnetic disk or an optical disk and other media that may store program codes.

In another aspect, a processor readable storage medium with a computer program stored thereon is provided in the embodiments of the present disclosure. The computer program is configured to cause a processor to perform the positioning method as described in the above aspect of the embodiments of the present disclosure.

In another aspect, a processor readable storage medium with a computer program stored thereon is provided in the embodiments of the present disclosure. The computer program is configured to cause a processor to perform the positioning method as described in another aspect of the embodiments of the present disclosure.

The above processor readable storage medium may be any available medium or data storage device that the processor may access, including but not limited to a magnetic memory (e.g., a floppy disk, a hard disk, a magnetic tape, a magnetic optical disk (MO)) and an optical memory (e.g., a CD, a DVD, a BD, a HVD), and a semiconductor memory (e.g., a ROM, an EPROM, an EEPROM, a non-volatile memory (a NAND a FLASH), a solid state drive (SSD)).

Embodiments in the present disclosure may be provided as methods, systems, or computer program products.

In another aspect, a computer program product including a computer program code is further provided in the embodiments of the present disclosure. When the computer program code is running on a computer, the positioning method as described in the above aspect of the embodiments of the present disclosure is implemented.

In another aspect, a computer program product including a computer program code is further provided in the embodiments of the present disclosure. When the computer program code is running on a computer, the positioning method as described in the above another aspect of the embodiments of the present disclosure is implemented.

In yet another aspect, a communication device including a processing circuit and an interface circuit is further provided in the embodiments of the present disclosure. The interface circuit is configured to receive a computer code or instruction, and transmit the computer code or instruction to the processing circuit, and the processing circuit is configured to run the computer code or instruction to perform the positioning method as described in the above aspect of the embodiments of the present disclosure.

In yet another aspect, a communication device including a processing circuit and an interface circuit is further provided in the embodiments of the present disclosure. The interface circuit is configured to receive a computer code or instruction, and transmit the computer code or instruction to the processing circuit, and the processing circuit is configured to run the computer code or instruction to perform the positioning method as described in the above another aspect of the embodiments of the present disclosure.

In yet another aspect, a computer program including a computer program code is further provided in the embodiments of the present disclosure. When the computer program code is running on a computer, the positioning method as described in the above aspect of the embodiments of the present disclosure is implemented.

In yet another aspect, a computer program including a computer program code is further provided in the embodiments of the present disclosure. When the computer program code is running on a computer, the positioning method as described in the above another aspect of the embodiments of the present disclosure is implemented.

Therefore, the present disclosure may adopt an embodiment in a form of complete hardware, an embodiment in a form of complete software, or an embodiment in a form of combining software and hardware. Further, the present disclosure may adopt a computer program product implemented on one or more computer available storage media (including but not limited to a disk memory and an optical memory) including a computer usable program code.

The present disclosure is described with reference to flowcharts and/or block diagrams of the methods (systems), and computer program products according to the embodiments of the present disclosure. It should be understood that each process and/or block in the flowchart and/or the block diagram, and a combination of the process and/or the box in the flowchart and/or the block diagram, may be implemented by computer-executable instructions. The computer-executable instructions may be provided to a processor of a general-purpose computer, a dedicated computer, an embedded processor, or other programmable data processing devices to produce a machine, such that instructions executed by the processor of the computer or other programmable data processing devices may produce an apparatus for implementing the functions specified in one or more processes of the flowchart and/or in one or more blocks of the block diagram.

The processor executable instructions may also be stored in a processor readable memory capable of guiding the computer or the other programmable data processing devices to operate in a particular manner, such that the instructions stored in the processor readable memory produce an article of manufacture including an instruction apparatus that implements the function specified in one or more processes of the flowchart and/or in one or more blocks of the block diagram.

The processor executable instructions may also be loaded onto a computer or other programmable data processing devices, such that a series of operation steps are performed on the computer or the other programmable devices to produce computer-implemented processings and the instructions executed on the computer or the other programmable devices provide steps of the functions specified in one or more processes of the flowchart and/or in one or more blocks of the block diagram.

In the technical solution in the present disclosure, the positioning request sent by the communication device is acquired. The positioning request is configured to indicate the UE to send positioning information at the sidelink interface. Then, the positioning information is sent at the sidelink interface, so that resources at the sidelink interface in the UE are saved, and the positioning efficiency at the sidelink interface is greatly improved.

All the embodiments of the disclosure may be executed separately or in combination with other embodiments, and are considered to be within a protection scope of the disclosure.

## Claims

1. A positioning method, applicable to a first user equipment (UE), the method comprising:
acquiring a positioning request sent by a communication device, wherein the positioning request is configured to indicate the first UE to send positioning information at a sidelink interface; and
sending the positioning information at the sidelink interface.

2. The method according to claim 1, wherein the communication device is any one of a second UE, a base station and a location management function server.

3. The method according to claim 1 or 2, wherein the positioning information comprises at least one of: positioning assistance information or a positioning pilot signal.

4. The method according to any one of claims 1 to 3, wherein the positioning request comprises at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, wherein different message names correspond to different positioning information.

5. The method according to any one of claims 1 to 3, wherein the positioning request is a specified signal, and the specified signal corresponds to at least one of: a type of the positioning information, a message comprising the positioning information or a resource corresponding to the positioning information.

6. The method according to any one of claims 1 to 5, further comprising:
sending an indication message at the sidelink interface, wherein the indication message is configured to indicate positioning information that the first UE may provide.

7. The method according to claim 6, wherein the indication message comprises at least one of:
whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

8. The method according to any one of claims 1 to 7, wherein the communication device is a base station or a location management function server, and the positioning request further comprises the positioning information.

9. The method according to any one of claims 1 to 8, further comprising:
sending the positioning request to the communication device.

10. A positioning method, applicable to a communication device, the method comprising:
sending a positioning request to a first user equipment (UE), wherein the positioning request is configured to indicate the first UE to send positioning information at a sidelink interface.

11. The method according to claim 10, wherein the positioning information comprises at least one of: positioning assistance information or a positioning pilot signal.

12. The method according to claim 10 or 11, wherein the positioning request comprises at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, wherein different message names correspond to different positioning information.

13. The method according to any one of claims 10 to 12, wherein the positioning request is a specified signal, and the specified signal corresponds to at least one of: a type of the positioning information, a message comprising the positioning information or a resource corresponding to the positioning information.

14. The method according to any one of claims 10 to 13, wherein the communication device is any one of a second UE, a base station and a location management function server.

15. The method according to any one of claims 10 to 14, wherein the communication device is a base station, and sending the positioning request to the first UE, comprises:
receiving a positioning request sent by a second UE, and sending the positioning request to the first UE;
or,
receiving a positioning request sent by the location management function server, and sending the positioning request to the first UE.

16. The method according to claim 15, wherein the positioning request further comprises the positioning information.

17. The method according to any one of claims 10 to 14, wherein the communication device is a second UE, and the method further comprises:
acquiring an indication message sent by the first UE at the sidelink interface, wherein the indication message is configured to indicate positioning information that the first UE may provide.

18. The method according to claim 17, wherein the indication message comprises at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of the positioning information corresponding to each positioning request signal, a resource of the positioning information corresponding to each positioning request signal or a resource index number of the positioning information corresponding to each positioning request signal.

19. A positioning apparatus, applicable to a first user equipment (UE), the positioning apparatus comprising
a memory configured to store a computer program, a transceiver configured to transmit and receive data under a control of a processor, and the processor configured to read the computer program in the memory and perform operations of:
acquiring a positioning request sent by a communication device, wherein the positioning request is configured to indicate the first UE to send positioning information at a sidelink interface; and
sending the positioning information at the sidelink interface.

20. The apparatus according to claim 19, wherein the communication device is any one of a second UE, a base station and a location management function server.

21. The apparatus according to claim 19 or 20, wherein the positioning information comprises at least one of: positioning assistance information or a positioning pilot signal.

22. The apparatus according to any one of claims 19 to 21, wherein the positioning request comprises at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, wherein different message names correspond to different positioning information.

23. The apparatus according to any one of claims 19 to 21, wherein the positioning request is a specified signal, and the specified signal corresponds to at least one of: a type of the positioning information, a message comprising the positioning information or a resource corresponding to the positioning information.

24. The apparatus according to any one of claims 19 to 23, wherein the processor is configured to control the transceiver to:
send an indication message at the sidelink interface, wherein the indication message is configured to indicate positioning information that the first UE may provide.

25. The apparatus according to claim 24, wherein the indication message comprises at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of positioning information corresponding to each positioning request signal, a resource of the positioning information corresponding to each positioning request signal or a resource index number of the positioning information corresponding to each positioning request signal.

26. The apparatus according to any one of claims 19 to 25, wherein the communication device is a base station or a location management function server, and the positioning request further comprises the positioning information.

27. The apparatus according to any one of claims 19 to 26, wherein, the processor is configured to control the transceiver to:
send the positioning request to the communication device.

28. A positioning apparatus, applicable to a communication device, the positioning apparatus comprising
a memory configured to store a computer program, a transceiver configured to transmit and receive data under a control of a processor, and the processor configured to read the computer program in the memory and perform operations of:
sending a positioning request to a first user equipment (UE), wherein the positioning request is configured to indicate the first UE to send positioning information at the sidelink interface; and
sending the positioning information at the sidelink interface.

29. The apparatus according to claim 28, wherein the positioning information comprises at least one of: positioning assistance information or a positioning pilot signal.

30. The apparatus according to claim 28 or 29, wherein the positioning request comprises at least one of: an identifier of the communication device, a type of the positioning information, an identifier of the positioning information, a sending mode of the positioning information, a sending duration of the positioning information, a sending period of the positioning information, a beam direction for sending the positioning information, a resource index number corresponding to the positioning information or a message name of the request, wherein different message names correspond to different positioning information.

31. The apparatus according to any one of claims 28 to 30, wherein the positioning request is a specified signal, and the specified signal corresponds to at least one of: a type of the positioning information, a message comprising the positioning information or a resource corresponding to the positioning information.

32. The apparatus according to any one of claims 28 to 31, wherein the communication device is any one of a second UE, a base station and a location management function server.

33. The apparatus according to any one of claims 28 to 32, wherein, the communication device is a base station, the positioning request is sent to the first UE, and the processor is configured to control the transceiver to:
receive a positioning request sent by a second UE, and send the positioning request to the first UE;
or,
receive a positioning request sent by the location management function server, and send the positioning request to the first UE.

34. The apparatus according to claim 33, wherein the positioning request further comprises the positioning information.

35. The apparatus according to any one of claims 28 to 32, wherein the communication device is the second UE, and the processor is configured to control the transceiver to:
acquire an indication message sent by the first UE at the sidelink interface, wherein the indication message is configured to indicate information of a positioning signal that the UE may provide.

36. The apparatus according to claim 35, wherein the indication message comprises at least one of: whether to send positioning information at the sidelink interface, a type of the positioning information sent at the sidelink interface, a sending message name associated with each type of positioning information, a resource index number corresponding to the positioning information sent at the sidelink interface, a resource corresponding to the positioning information sent at the sidelink interface, a sending mode of the positioning information, a signal identifier associated with each type of positioning information, a request message name associated with each type of positioning information, a type of the positioning information corresponding to each positioning request signal, a resource of the positioning information corresponding to each positioning request signal or a resource index number of the positioning information corresponding to each positioning request signal.

37. A positioning apparatus, applicable to a first user equipment (UE), the apparatus comprising:
a first acquiring unit, configured to acquire a positioning request sent by a communication device, wherein the positioning request is configured to indicate the first UE to send positioning information at a sidelink interface; and
a first sending unit, configured to send the positioning information at the sidelink interface.

38. A positioning apparatus, applicable to a communication device, the apparatus comprising:
a fourth sending unit, configured to send a positioning request to a first user equipment (UE), wherein the positioning request is configured to indicate the first UE to send positioning information at a sidelink interface.

39. A processor readable storage medium with a computer program stored thereon, wherein the computer program is configured to cause a processor to perform the method of any one of claims 1 to 9.

40. A processor readable storage medium with a computer program stored thereon, wherein the computer program is configured to cause a processor to perform the method of any one of claims 10 to 18.

41. A computer program product, comprising a computer program code, wherein when the computer program code is running on a computer, the method of any one of claims 1 to 9 is implemented.

42. A computer program product, comprising a computer program code, wherein when the computer program code is running on a computer, the method of any one of claims 10 to 18 is implemented.

43. A communication device, comprising a processing circuit and an interface circuit, wherein the interface circuit is configured to receive a computer code or instruction, and transmit the computer code or instruction to the processing circuit, and the processing circuit is configured to run the computer code or instruction to perform the method of any one of claims 1 to 9.

44. A communication device, comprising a processing circuit and an interface circuit, wherein the interface circuit is configured to receive a computer code or instruction, and transmit the computer code or instruction to the processing circuit, and the processing circuit is configured to run the computer code or instruction to perform the method of any one of claims 10 to 18.

45. A computer program, comprising a computer program code, wherein when the computer program code is running on a computer, the computer is caused to perform the method of any one of claims 1 to 9.

46. A computer program, comprising a computer program code, wherein when the computer program code is running on a computer, the computer is caused to perform the method of any one of claims 10 to 18.
